# EUROPÄISCHE PATENTSCHRIFT

(11) **EP 1 710 886 B1**
(45) Veröffentlichungstag und Bekanntmachung des Hinweises auf die Patenterteilung: **19.12.2012**
(21) Anmeldenummer: 06006993.7
(22) Anmeldetag: 31.03.2006
(51) Int. Cl.: H02G 15/04, H02G 3/06

(54) **Kabeldurchführung**
Cable feedthrough
Traversée de câble

(30) Priorität: 08.04.2005 DE 102005017690
(43) Veröffentlichungstag der Anmeldung: 11.10.2006
(73) Patentinhaber: Lapp Engineering & Co., 6330 Cham (CH)
(72) Erfinder: Drotleff, Rolf, 71263 Weil der Stadt (DE); Zankl, Martin, 71364 Winnenden (DE); Müller, Daniel, 71686 Remseck (DE); Mikeler, Eugen, 71126 Gäufelden (DE)
(74) Vertreter: Hoeger, Stellrecht & Partner Patentanwälte

(56) Entgegenhaltungen:
- EP-A- 1 220 407
- DE-A1- 3 604 214
- DE-C1- 4 128 632
- GB-A- 2 138 218
- US-A- 5 866 853
- US-A1- 2002 006 309
- US-B1- 6 754 430

## Beschreibung

Die Erfindung betrifft eine Kabeldurchführung umfassend einen Gehäusestutzen mit einem zentralen Durchbruch, eine an dem Gehäusestutzen vorgesehene Fixierung mit einem um eine Mittelachse des zentralen Durchbruchs drehbaren Spannelement, das zum Festlegen eines durch die Kabeldurchführung hindurchzuführenden Kabels in einer zweiten Drehrichtung drehbar und dadurch mittels einer zweiten Gewindeführung bewegbar ist, und eine an dem Gehäusestutzen vorgesehene Montageeinrichtung, mit einem Montageansatz der durch eine Öffnung in einem Wandbereich eines Geräts hindurchführbar ist und Schnappelemente aufweist, die einen Öffnungsrand hintergreifen, sowie mit einem an dem Gehäusestutzen im Abstand von den Schnappelementen angeordneten und mittels einer Vorschubführung durch eine Drehbewegung um die Mittelachse in Richtung der Schnappelemente verstellbaren Druckring, der zum Festlegen des Gehäusestutzens in einer ersten Drehrichtung drehbar und dadurch in Richtung der Schnappelemente durch eine erste Gewindeführung verstellbar ist, wobei die erste Drehrichtung entgegengesetzt zu der zweiten Drehrichtung des Spannelements verläuft.

Derartige Kabeldurchführungen sind aus der US 5,866,853 bekannt.

Aus der US 2002/006309 A1 ist außerdem eine Kabeldurchführung bekannt, die folgende Merkmale aufweist:
einen Gehäusestutzen mit einem zentralen Durchbruch, eine an dem Gehäusestutzen vorgesehene Fixierung, mit einem um eine Mittelachse des zentralen Durchbruchs drehbaren Spannelement, das zum Festlegen eines durch die Kabeldurchführung hindurchzuführenden Kabels in einer Drehrichtung drehbar und dadurch mittels einer zweiten Gewindeführung bewegbar ist,
eine an dem Gehäusestutzen vorgesehene Montageeinrichtung mit einem Montageansatz der durch eine Öffnung in einem Wandbereich eines Geräts hindurchführbar ist und Schnappelemente aufweist, die einen Öffnungsrand hintergreifen, sowie einem an dem Gehäusestutzen im Abstand von den Schnappelementen angeordneten und mittels einer Vorschubführung durch eine Drehbewegung um die Mittelachse in Richtung der Schnappelemente verstellbaren Druckring, der zum Festlegen des Gehäusestutzens in einer ersten Drehrichtung drehbar und dadurch in Richtung der Schnappelemente durch eine erste Gewindeführung verstellbar ist.

Bei diesen Kabeldurchführungen besteht jedoch das Problem, dass sich der an dem Wandbereich eines Geräts montierte Gehäusestutzen lösen kann.

Der Erfindung liegt daher die Aufgabe zugrunde, eine Kabeldurchführung der gattungsgemäßen Art derart zu verbessern, dass eine sicherere Montage des Gehäusestutzens möglich ist.

Diese Aufgabe wird bei einer Kabeldurchführung der eingangs beschriebenen Art erfindungsgemäß dadurch gelöst, dass das Spannelement eine Hutmutter ist, die einen Lamellenkorb des Gehäusestutzens übergreift und die beim Drehen in der zweiten Drehrichtung den Lamellenkorb in Richtung einer Mittelachse des zentralen Durchbruchs des Gehäusestutzens beaufschlagt, dass die erste Gewindeführung mindestens einen Gewindegang mit einer geringeren Steigung aufweist als mindestens ein Gewindegang der zweiten Gewindeführung, dass die erste Gewindeführung eine größere Selbsthemmung aufweist als die für das Bewegen der Hutmutter zum Festlegen des Kabels vorgesehene zweite Gewindeführung, dass die erste Gewindeführung zum Bewegen des Druckrings ein aufgrund seiner Steigung stets selbsthemmendes Gewinde umfasst.

Dadurch, dass der Druckring in Richtung der Schnappelemente durch eine Gewindeführung verstellbar ist, die eine größere Selbsthemmung aufweist als eine für das Bewegen des Spannelements zum Festlegen des Kabels vorgesehene zweite Gewindeführung, wird erreicht, dass die einmal durch Verstellen des Druckrings fest an dem Wandbereich montierte Kabeldurchführung sich nicht löst, wenn das Spannelement zum Festlegen des durchzuführenden Kabels bewegt wird.

Ferner wird dadurch, dass die für den Druckring vorgesehene erste Gewindeführung mindestens einen Gewindegang mit einer geringeren Steigung aufweist als mindestens ein Gewindegang der zweiten Gewindeführung und dadurch, dass die erste Gewindeführung zum Bewegen des Druckrings ein aufgrund seiner Steigung stets, das heißt materialunabhängig, selbsthemmendes Gewinde umfasst, eine vorteilhafte Selbsthemmung erreicht.

Ferner sieht eine günstige Ausführungsform vor, dass die zweite Gewindeführung zum Bewegen des Spannelements ein mehrgängiges Gewinde umfasst.

Vorzugsweise umfasst die zweite Gewindeführung zum Bewegen des Spannelements ein Trapezgewinde.

Hinsichtlich der Ausbildung der Schnappelemente zur Festlegung des Montageansatzes wurden bislang keine näheren Angaben gemacht. So sieht eine besonders vorteilhafte Lösung vor, dass die Schnappelemente radial zu einer Mittelachse des zentralen Durchbruchs bewegbare und einen Öffnungsrand in dem Wandbereich hintergreifende Abstützflächen aufweisen, mit welchen diese an dem Wandbereich anlegbar sind.

Dadurch, dass die Schnappelemente radial zur Mittelachse bewegbar sind, lässt sich die erfindungsgemäße Kabeldurchführung in einfacher Weise in die Öffnung des Wandbereichs einführen um die Abstützflächen dann an einer in Einführrichtung hinteren Seite des Wandbereichs anzulegen.

Um zusätzlich zu verhindern, dass sich der Montageansatz bei einer größer als dessen Durchmesser ausgeführten Öffnung außerzentrisch verschiebt und um außerdem zu vermeiden, dass die Schnappelemente an dem Wandbereich entlanggleiten und somit gespreizt werden können, sind vorzugsweise den Abstützflächen der Schnappelemente an den Schnappelementen vorgesehene Zentrierflächen zugeordnet.

Derartige Zentrierflächen sind dabei insbesondere an einer der Mittelachse zugewandten Seite der Öffnung anlegbar und führen einerseits zu einer Zentrierung des Montageansatzes in der Öffnung und verhindern andererseits ein Spreizen der Schnappelemente.

Besonders günstig ist es dabei, wenn der Montageansatz auf gegenüberliegenden Seiten angeordnete Schnappelemente aufweist.

Eine Lösung sieht vor, dass die Schnappelemente so angeordnet sind, dass sie paarweise unmittelbar nebeneinander liegen, das heißt, dass die unmittelbar nebeneinander liegenden Schnappelemente nicht durch Stege voneinander getrennt sind, sondern lediglich durch einen Zwischenraum, der eine unabhängige Bewegung der Schnappelemente relativ zueinander zulässt.

Im Sinne einer optimalen Ausrichtung des Montageansatzes relativ zur Öffnung ist vorzugsweise vorgesehen, dass in einem Winkelabstand von weniger als 180° um die Mittelachse herum Schnappelemente an dem Montageansatz vorgesehen sind.

Um zu verhindern, dass sich der Montageansatz in der Öffnung des Wandbereichs beim Drehen des Druckrings oder insbesondere auch des Spannelementes mitdreht, sieht eine besonders vorteilhafte Ausführungsform vor, dass die Schnappelemente mit einer reibungserhöhenden Beschichtung versehen sind, welche ihrerseits insbesondere die Abstützfläche trägt.

Noch vorteilhafter ist es, wenn die reibungserhöhende Beschichtung auch die Zentrierfläche trägt, so dass sowohl über die Zentrierfläche als auch über die Abstützfläche eine möglichst gute reibschlüssige Fixierung des Montageansatzes in der Öffnung erreichbar ist.

Eine andere vorteilhafte Lösung sieht vor, dass die Schnappelemente mit eine Drehung des Montageansatzes hemmenden Oberflächenstrukturen versehen sind.

Derartige Oberflächenstrukturen sind Rippen oder Vorsprünge oder gerauhte Oberflächen, die insbesondere im Bereich der Stützfläche und auch insbesondere im Bereich der Zentrierflächen vorgesehen sein können.

Eine weitere vorteilhafte, eine Drehung des Montageansatzes hemmende Lösung sieht vor, dass der Montageansatz in Bereichen außerhalb der Schnappelemente mit einem Öffnungsrand reibschlüssig wechselwirkende Vorsprünge aufweist.

Derartige Vorsprünge können Rippen oder Lamellen sein, die beim Einsetzen des Montageansatzes in die Öffnung auch partiell abgetragen oder deformiert werden können, um eine möglichst gute reibschlüssige, gegebenenfalls teilweise formschlüssige Verbindung zwischen dem Montageansatz und dem Öffnungsrand herzustellen.

Im einfachsten Fall sind die Vorsprünge dabei als an dem Montageansatz angeformte Rippen ausgebildet.

Hinsichtlich der Ausbildung des Druckrings wurden bislang keine näheren Angaben gemacht. So sieht eine vorteilhafte Lösung vor, dass der Druckring eine dem Wandbereich zugewandte Flanschfläche aufweist, mit welcher der Druckring an den Wandbereich anlegbar ist, um den Wandbereich zwischen den Abstützflächen der Schnappelemente und der Flanschfläche einzuspannen.

Um insbesondere im Bereich der Öffnung des Wandbereichs eine Abdichtung erreichen zu können, ist vorzugsweise vorgesehen, dass der Druckring eine Aufnahme für einen Dichtring aufweist.

Zweckmäßigerweise ist die Aufnahme als sich an die Flanschfläche anschließende und in einen Gewindedurchbruch des Druckrings übergehende Ausnehmung ausgebildet, so dass der Dichtring auch zur Abdichtung gegenüber dem Montageansatz eingesetzt werden kann.

Zweckmäßigerweise ist dabei die Ausnehmung so ausgebildet, dass sie eine dem Dichtring in Richtung des Wandbereichs und in Richtung des Montageansatzes beaufschlagende Pressfläche aufweist, so dass eine zweifache Abdichtung, nämlich einmal gegen den Wandbereich und ein andermal gegen den Montageansatz, realisierbar ist.

Besonders günstig ist es dabei, wenn der Montageansatz eine zylindrische Anlagefläche für die Dichtung aufweist.

Um beim Einsetzen des Montageansatzes in die Öffnung des Wandabschnitts und Einrasten der Schnappelemente eine Vorspannung in Richtung der Mittelachse zu erhalten, die dafür sorgt, dass die Schnappelemente mit ihren Abstützflächen an einer Seite des Wandabschnitts anliegen und somit sich der Montageansatz nicht in der Öffnung dreht, ist vorzugsweise vorgesehen, dass der Druckring mit einem elastischen Vorspannelement versehen ist.

Dieses elastische Vorspannelement sorgt dafür, dass nach dem Hintergreifen des Wandabschnitts durch die Abstützflächen der Schnappelemente diese an dem Wandabschnitt anliegen und zumindest eine gewisse Drehsicherung des Montageansatzes in der Öffnung des Wandbereichs bewirken.

Ein derartiges Vorspannelement kann dabei ein elastischer Ring sein, der an dem Druckring abgestützt ist.

Vorzugsweise ist dieser elastische Ring in einer Ausnehmung des Druckrings angeordnet, die sich von der Flanschfläche in Richtung des Gewindedurchbruchs erstreckt.

Ferner hat es sich als zweckmäßig erwiesen, wenn die Ausnehmung eine derartige Ausdehnung aufweist, dass beim Festziehen des Druckrings das dabei in Richtung der Mittelachse beaufschlagte elastische Vorspannelement in die Ausnehmung hineinbewegt werden kann und somit die Möglichkeit besteht, dass der Druckring unmittelbar mit der Flanschfläche schließlich den Wandabschnitt auf seiner diesem zugewandten Seite beaufschlagt.

Eine besonders günstige Lösung sieht ferner noch vor, dass das elastische Vorspannelement gleichzeitig als Dichtelement wirksam ist, und zwar als Dichtelement, welches eine Abdichtung zwischen einer Seite des Wandabschnitts und einer Umfangsfläche des Gehäusestutzens bewirkt, so dass zwischen der Seite des Wandabschnitts, und der Umfangsfläche des Gehäusestutzens ein dichter Abschluss besteht.

Ein weiteres vorteilhaftes Ausführungsbeispiel der erfindungsgemäßen Lösung sieht vor, dass der Druckring an diesem federelastisch gehaltene Vorspannelemente aufweist.

Mit derartigen Vorspannelementen besteht die Möglichkeit, eine Sicherung des Druckrings an dem Wandbereich zu erreichen und auch bereits bei nicht vollständiger Beaufschlagung des Wandbereichs durch den Druckring eine gewisse Vorspannung zu erzeugen, welche ein Lösen der Montageeinrichtung durch Drehen des Druckrings verhindert.

Besonders günstig ist es, wenn die Vorspannelemente aus einer Flanschfläche des Druckrings in Richtung des Wandbereichs vorspringend ausgebildet sind, so dass die Vorspannelemente zunächst den Wandbereich beaufschlagen bevor eine vollständige Beaufschlagung über den Druckring erfolgt.

Hinsichtlich der Montage des Druckrings an dem Gehäusestutzen sind die unterschiedlichsten Möglichkeiten denkbar.

Eine vorteilhafte Ausführung sieht vor, dass der Druckring über die Schnappelemente hinweg zu der für die Bewegung desselben vorgesehenen Gewindeführung bewegbar ist und dann auf die Gewindeführung aufbringbar ist.

Diese Lösung bietet die Möglichkeit, den Durchmesser des Druckrings so klein wie möglich, vorzugsweise ungefähr in der Größenordnung des Spannelementes zu wählen und somit vorteilhafte Montagebedingungen zu schaffen.

Um den Druckring über die Schnappelemente hinweg bewegen zu können, ist es beispielsweise bei einer vorteilhaften Lösung denkbar, dass der Druckring unter elastischer Ausweichbewegung der Schnappelemente über diese hinweg bewegbar ist, so dass die Schnappelemente eine dem Einführen des Montageansatzes vergleichbare Ausweichbewegung ausführen müssen, um den Druckring bis zu dem Gewinde zu bewegen.

Diese Lösung hat aber andererseits den Vorteil, dass damit der Druckring dann, wenn er über die Schnappelemente hinweg bewegt ist, unverlierbar durch die Schnappelemente fixiert ist.

Eine andere vorteilhafte Lösung sieht vor, dass der Druckring der Größe und der Anordnung der Schnappelemente entsprechende Aussparungen aufweist. Diese Aussparungen erlauben es, den Druckring ohne Ausweichbewegung der Schnappelemente über diese hinweg zu bewegen.

Die Aussparungen könnten dabei einen wesentlichen Teil des Druckrings durchsetzen. Eine vorteilhafte Lösung sieht vor, dass das Gewinde des Druckrings die Aussparungen aufweist und somit lediglich durch fehlende mit Gewinde versehene Bereiche die Aussparungen realisiert werden können.

Eine weitere günstige Lösung sieht vor, dass der Druckring längs einer Trennfläche, die insbesondere den Druckring in zwei Bogensegmente aufteilt, in Druckringteile teilbar ist und auf dem Montageaufsatz unter Verbindung der beiden Druckringteile aufsetzbar ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine teilweise aufgeschnittene Seitenansicht eines ersten Ausführungsbeispiels einer erfindungsgemäßen Kabeldurchführung;
- Fig. 2: eine Seitenansicht eines Gehäusestutzens des ersten Ausführungsbeispiels;
- Fig. 3: einen Schnitt längs Linie 3-3 in Fig. 2;
- Fig. 4: eine perspektivische Darstellung eines Gehäusestutzens eines zweiten Ausführungsbeispiels einer erfindungsgemäßen Kabeldurchführung;
- Fig. 5: eine perspektivische Darstellung eines dritten Ausführungsbeispiels einer erfindungsgemäßen Kabeldurchführung;
- Fig. 6: eine perspektivische Darstellung eines vierten Ausführungsbeispiels einer erfindungsgemäßen Kabeldurchführung;

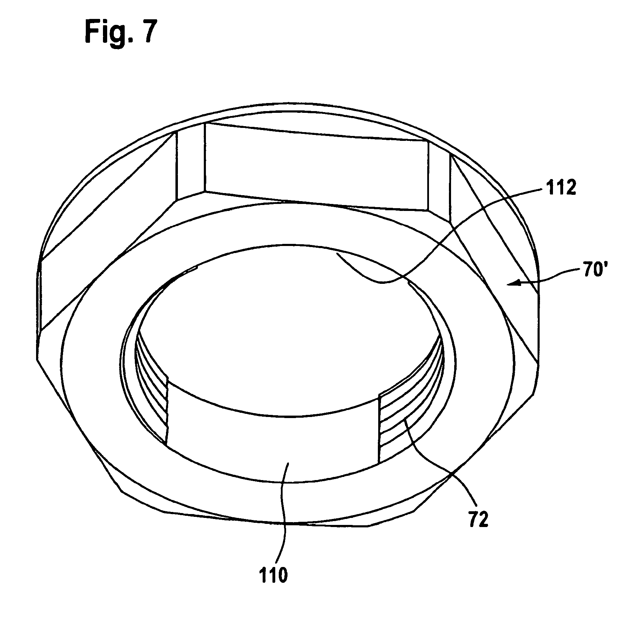

- Fig. 7: eine perspektivische Darstellung eines Druckrings eines fünften Ausführungsbeispiels einer erfindungsgemäßen Kabeldurchführung;
- Fig. 8: eine perspektivische Darstellung eines sechsten Ausführungsbeispiels eines Druckrings einer erfindungsgemäßen Kabeldurchführung;
- Fig. 9: eine Darstellung des Druckrings gemäß Fig. 8 in seiner geteilten Stellung;
- Fig. 10: eine perspektivische Darstellung eines Druckrings eines siebten Ausführungsbeispiels einer erfindungsgemäßen Kabeldurchführung;
- Fig. 11: eine perspektivische Explosionsdarstellung eines Druckrings eines achten Ausführungsbeispiels einer erfindungsgemäßen Kabeldurchführung;
- Fig. 12: einen teilweisen Schnitt durch den Druckring des achten Ausführungsbeispiels gemäß Fig. 11 im zusammengesetzten Zustand und
- Fig. 13: eine vergrößerte Darstellung eines Bereichs A in Fig. 12.

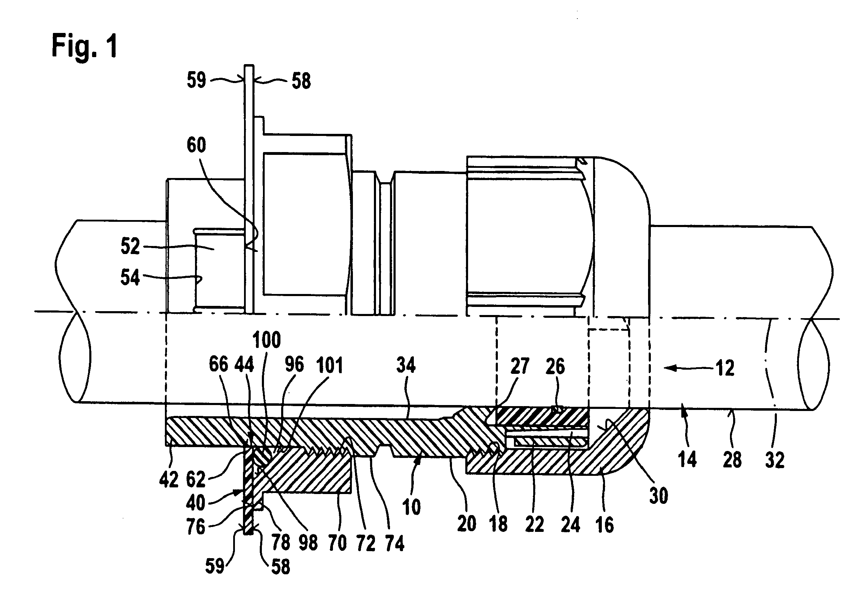

Ein in Fig. 1 dargestelltes Ausführungsbeispiel einer erfindungsgemäßen Kabeldurchführung umfasst einen als Ganzes mit 10 bezeichneten Gehäusestutzen, welcher mit einer Fixierung 12 für ein durch die Kabeldurchführung hindurchführbares Kabel 14 versehen ist.

Im Einzelnen umfasst die Fixierung 12 ein als Hutmutter 16 ausgebildetes Spannelement, welches mit einem Innengewinde 18 auf ein Außengewinde 20 des Gehäusestutzens 10 aufschraubbar ist.

Ferner umfasst der Gehäusestutzen 10 in einem von der Hutmutter 16 übergriffenen und sich an das Außengewinde 20 anschließenden Endbereich 22 einen als Ganzes mit 24 bezeichneten Lamellenkorb, welcher einen Dichtring 26 umschließt, und mit welchem der Dichtring 26 derart beaufschlagbar ist, dass dieser sich einerseits dichtend an eine Dichtkante 27 des Gehäusestutzens 10 und andererseits dichtend an einen Mantel 28 des Kabels 14 anlegt.

Zum Beaufschlagen des Lamellenkorbs 24 ist die Hutmutter 16 mit einer konischen Fläche 30 versehen, welche beim Aufschrauben der Hutmutter 16 mit dem Innengewinde 18 auf das Außengewinde 20 den Lamellenkorb 24 in Richtung einer Mittelachse 32 eines zentralen Durchbruchs 34 des Gehäusestutzens 10 beaufschlagt.

Zur Montage des Gehäusestutzens 10 an einem Wandbereich 40 eines Gerätes ist der Gehäusestutzen 10 mit einer Montageeinrichtung 41 versehen, die einen Montageansatz 42 aufweist, welcher durch eine Öffnung 44 des Wandbereichs 40 hindurchführbar ist.

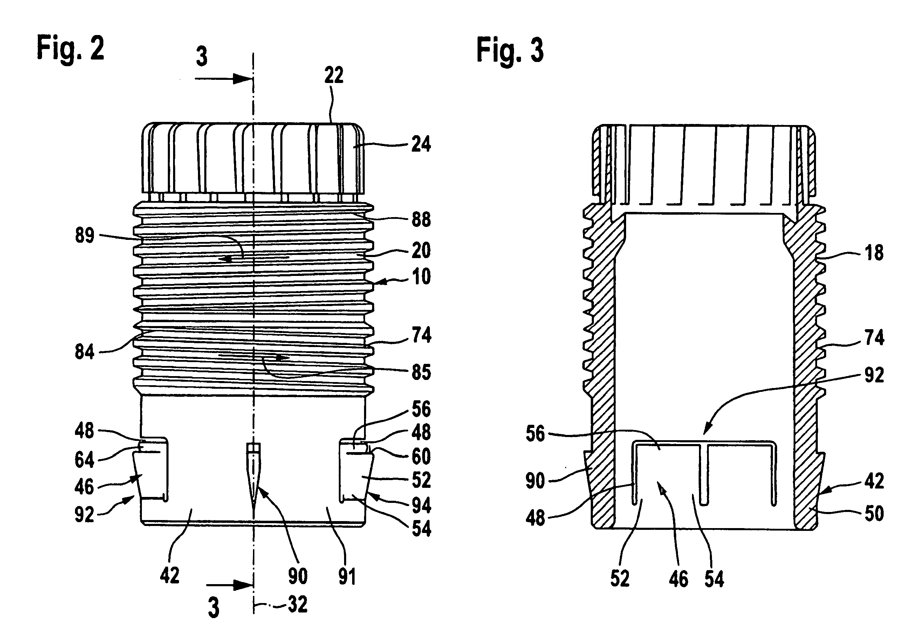

Der Montageansatz 42 ist, wie in Fig. 1 bis 3 dargestellt, mit Schnappelementen 46 versehen, welche einstückig an dem Montageansatz 42 angeformt sind und jeweils durch eine U-förmige Nut 48, welche eine Wand 50 des Montageansatzes 42 durchsetzt, als quer zur Mittelachse 32 federnde Zungen 52 ausgebildet sind, deren Zungenansatz 54 in die Wand 50 des Montageansatzes 52 übergeht und die an einem dem Zungensatz 54 gegenüberliegenden Zungenende 56 Abstützflächen 60 aufweisen, die quer zur Mittelachse 32 verlaufen und, wie in Fig. 1 dargestellt, in der Lage sind, nach Hindurchführen des Montageansatzes 42 durch die Öffnung 44 von einer ersten Seite 58 des Wandbereichs 40 zu einer zweiten Seite 59 einen Öffnungsrand 62 der Öffnung 44 auf der zweiten Seite 59 des Wandbereichs 40 zu hintergreifen, so dass der Öffnungsrand 62 an den Abstützflächen 60 anlegbar ist.

Darüber hinaus sind am Zungenende 56 noch zusätzlich Zentrierflächen 64 vorgesehen, welche in die Öffnung 44 eingreifen und an einer dem Montageansatz 42 zugewandten Innenfläche 66 des Öffnungsrandes 62 anlegbar sind, um den Montageansatz 42 und somit den Gehäusestutzen 10 in der Öffnung 44 zu zentrieren.

Gleichzeitig verhindern die Zentrierflächen 64 ein gegebenenfalls bei starker Zugbelastung des Montageansatzes 42 erfolgendes Aufspreizen der Zungen 52 durch Bewegen derselben weg von der Mittelachse 32.

Um den Montageansatz 42 relativ zu dem Öffnungsrand 62 des Wandbereichs 40 festlegen zu können ist, wie in Fig. 1 dargestellt, ein den Gehäusestutzen 10 umschließender Druckring 70 vorgesehen, welcher mit einem Innengewinde 72 auf ein Außengewinde 74 des Gehäusestutzens 10 aufschraubbar ist und damit durch Drehen in Richtung der Mittelachse 32 bewegbar ist.

Somit lässt sich eine Flanschfläche 76 eines an den Druckring 70 angeformten Druckflansches 78 an dem Wandbereich 40 auf einer den Abstützflächen 60 gegenüberliegenden Seite anlegen und somit der Wandbereich 40 zwischen den Abstützflächen 60 und der Flanschfläche 76 einspannen.

Um eine sichere Montage des Gehäusestutzens 10 an dem Wandbereich 40 zu ermöglichen, sind ein Gewindegang 84 des Außengewindes 74 und ein entsprechender Gewindegang 82 des Innengewindes 72 gegenüber der Mittelachse 32 mit einer Steigung versehen, die geringer ist als ein Winkel der Selbsthemmung für die Materialpaarung von Innengewinde 72 und Außengewinde 74.

Ferner sind das Innengewinde 72 und das Außengewinde 74 sogenannte Linksgewinde, so dass ein Anlegen der Flanschfläche 76 an dem Wandbereich 40 eine einer Linksdrehung entsprechende Drehrichtung 85 erfordert.

Im Gegensatz dazu ist das Außengewinde 18 auf dem Gehäusestutzen 10 zum Aufschrauben der Hutmutter 16 ein Rechtsgewinde, so dass das Aufschrauben der Hutmutter 16 eine einer Rechtsdrehung entsprechende Drehrichtung 89 erfordert, wobei Gewindegänge 88 des Außengewindes 20 eine größere Steigung aufweisen als die Gewindegänge 84 und auch keine Steigung aufweisen müssen, die geringer ist als die für die Selbsthemmung erforderliche Steigung.

Vielmehr lässt sich die Hutmutter 16 dadurch drehfest am Lamellenkorb 24 festlegen, dass die konische Fläche 30 mit dem Lamellenkorb 24 verrastende Vorsprünge aufweist.

Beispielsweise sind die Gewindegänge 88 des Außengewindes 20 Gewindegänge 88 eines zweigängigen Trapezgewindes, ausgeführt als Rechtsgewinde, die bei einer geringen Drehung der Hutmutter 16 eine große Bewegung der Hutmutter 16 in Richtung der Mittelachse 32 erlauben und somit eine nennenswerte Bewegung des Lamellenkorbs 24 in Richtung der Mittelachse 32 um den Dichtring 26 fest an dem Mantel 28 des Kabels 14 anlegen zu können.

Ferner haben vorzugsweise sowohl das Außengewinde 20 als auch das Außengewinde 74 des Gehäusestutzens 10 einen ungefähr gleich großen Durchmesser, so dass keine Möglichkeit besteht, den Druckring 70 als Ganzes von seiten des Lamellenkorbs 24 über das Außengewinde 18 hinweg auf das Außengewinde 74 zu bringen.

Vielmehr ist beim ersten Ausführungsbeispiel ein Aufsetzen des Druckrings 70 lediglich von seiten des Montageansatzes 42 möglich, wobei das Innengewinde 72 über die Schnappelemente 46 hinweg bewegt werden muss, was jedoch dadurch möglich ist, dass die Zungen 52 mit ihren Abstützflächen 60 radial nach Innen zur Mittelachse 32 hin federnd ausweichen können.

Dadurch, dass das zum Verschieben des Druckrings 70 mit der Flanschfläche 76 in Richtung des Wandbereichs 40 vorgesehene Gewinde 72, 74 ein Linksgewinde ist, wird sich dieses beim Anziehen der Hutmutter 16 mit Rechtsgewinde nicht lösen, sondern weiter festziehen, so dass sichergestellt ist, dass die einmal an dem Wandbereich 40 mittels der Montageeinrichtung montierte Kabeldurchführung sich beim nachträglichen Fixieren des durch die Kabeldurchführung hindurchgeführten Kabels 14 mit der Fixierung 12 durch Anziehen der Hutmutter 16 nicht löst sondern fest an dem Wandbereich 40 montiert verbleibt.

Die Festlegung des Montageansatzes 42 an dem Öffnungsrand 62 des Wandbereichs 40 kann noch dadurch verbessert werden, dass der Montageansatz 42 in Wandbereichen 91 zwischen den Zungen 52 noch zusätzliche an diesen angeformte Rippen 90 aufweist, die noch für eine zusätzliche Zentrierung und vorzugsweise eine kraftschlüssige drehfeste Festlegung des Montageansatzes 42 in der Öffnung 44 sorgen.

Die Rippen 90 sind dabei so ausgebildet, dass sie sich beim Hindurchführen des Montageansatzes 42 durch die Öffnung 44 deformieren oder auch dass sie teilweise abgetragen werden, jedoch noch reibschlüssig an der Innenfläche des Öffnungsrandes 62 anliegen.

Bei dem ersten Ausführungsbeispiel gemäß Fig. 1 bis 3 sind die Schnappelemente 46 vorzugsweise als Paare 92, 94 ausgebildet, die auf gegenüberliegenden Seiten der Mittelachse 32 angeordnet sind, wobei vorzugsweise die Zungen 52 der beiden eines der Paare 92, 94 bildenden Schnappelemente 46 unmittelbar nebeneinander liegen.

Das erste Ausführungsbeispiel der erfindungsgemäßen Kabeldurchführung kann grundsätzlich aus beliebigen Materialien hergestellt sein, so lange sich mit diesen die federnden Zungen 52 in dem Montageansatz 42 realisieren lassen.

Besonders günstig ist es, wenn der Gehäusestutzen 10, die Überwurfmutter 16 und der Druckring 70 alle aus Kunststoff hergestellt sind.

Damit lässt sich auch in einfacher Weise eine federnde Bewegbarkeit der Schnappelemente 46 realisieren.

Um einen dichten Abschluss zwischen dem Gehäusestutzen 10 und dem Wandbereich 40 zu erreichen, ist der Druckring 70 mit einer Ausnehmung 96 versehen, die durch eine konisch zur Mittelachse 32 verlaufende und sich von der Flanschfläche 76 zum Innengewinde 72 erstreckenden Pressfläche 98 gebildet ist.

In der Ausnehmung 96 liegt ein Dichtring 100, der seinerseits an dem Öffnungsrand 62 und einer Umfangsfläche 101 des Gehäusestutzens 10, die sich unmittelbar an den Wandbereich 40 anschließt, anlegbar ist, um somit zwischen der Umfangsfläche 101 und dem Öffnungsrand 62 einen dichten Abschluss zu bewirken.

Dabei bewirkt die konische Pressfläche 98 des Druckrings 70, dass beim Festziehen des Druckrings 70, um dessen Flanschfläche 76 an den Wandbereich 40 anzulegen, gleichzeitig der Dichtring 100 sowohl an dem Öffnungsrand 62 als auch an der Umfangsfläche 101 kraftbeaufschlagt angelegt wird, um einen dichten Abschluss zwischen dem Gehäusestutzen 10 und dem Wandbereich 40 zu erreichen.

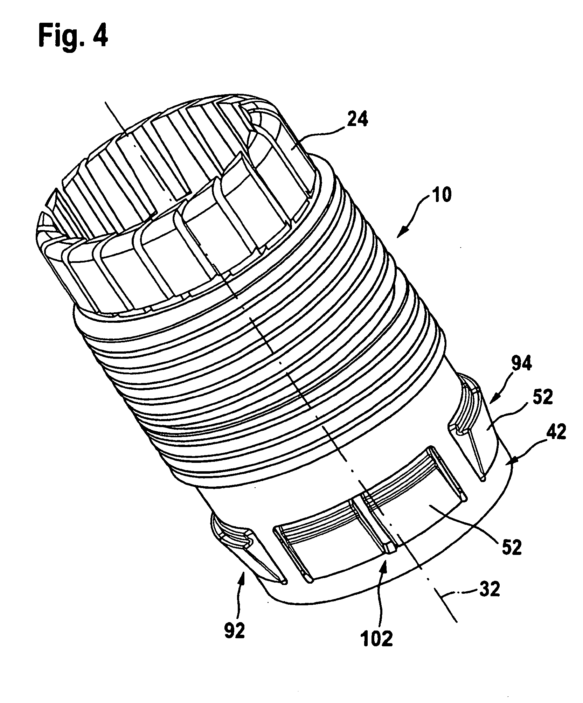

Bei einem zweiten Ausführungsbeispiel der erfindungsgemäßen Kabeldurchführung, deren Gehäusestutzen 10 in Fig. 4 dargestellt ist, sind diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Im Gegensatz zum ersten Ausführungsbeispiel sind bei dem zweiten Ausführungsbeispiel nicht nur die einander bezüglich der Mittelachse 32 gegenüberliegenden Paare 92, 94 von Schnappelementen 46 vorgesehen, sondern gegenüber diesen in einem Winkelabstand von ungefähr 90° versetzt weitere, bezogen auf die Mittelachse 32 einander gegenüberliegende Paare von Schnappelementen 46, von denen lediglich das Paar 102 der Zungen 52 in Fig. 4 sichtbar ist.

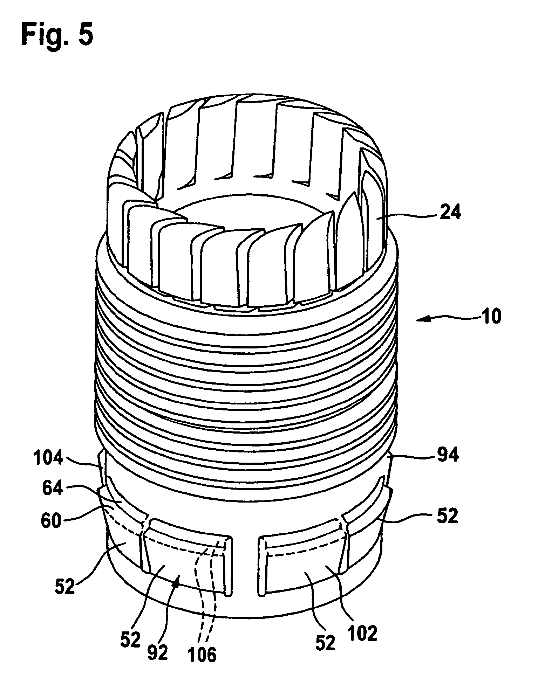

Bei einem dritten Ausführungsbeispiel einer erfindungsgemäßen Kabeldurchführung, dargestellt in Fig. 5, ist ebenfalls lediglich der Gehäusestutzen 10 dargestellt, mit den Paaren 92 und 94 sowie den Paaren 102 und 104 der Schnappelemente 46.

Außerdem sind die Zungen 52 im Bereich ihrer Abstützflächen 60 und ihrer Zentrierflächen 64 mit einer eine Reibung an dem Öffnungsrand 62 erhöhenden Beschichtung 106 versehen, welche die reibschlüssige Festlegung des Montageansatzes 42 in der Öffnung 44 verbessert.

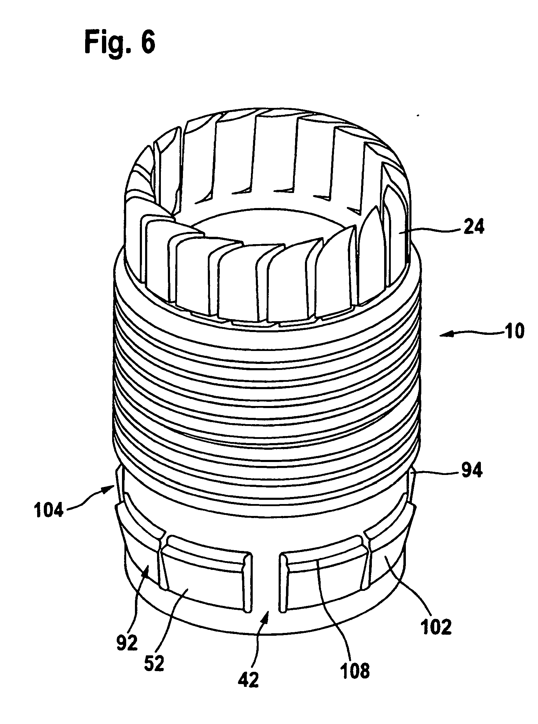

Alternativ zum Vorsehen der Beschichtung 106 sind bei einem vierten, in Fig. 6 dargestellten Ausführungsbeispiel, das ebenfalls lediglich den Gehäusestutzen 10 zeigt, die Zungen 52 der Paare 92, 94, 102, 104 mit Rippen 108 versehen, die ebenfalls im Bereich der Öffnung 44 durch Anliegen an dem Öffnungsrand 62 reibungserhöhend wirken um somit die kraftschlüssige und drehfeste Fixierung des Montageansatzes 42 an dem Wandbereich 40 zu verbessern.

Sowohl das dritte als auch das vierte Ausführungsbeispiel sind im Übrigen mit den voranstehenden Ausführungsbeispielen identisch, so dass auf die Ausführungen zu diesen Ausführungsbeispielen Bezug genommen wird.

Bei einem fünften Ausführungsbeispiel ist vorzugsweise der Druckring 70' so ausgebildet, dass dessen Innengewinde 72 Aussparungen 110 und 112 aufweist, welche in Umfangsrichtung eine den Paaren 92, 94 von Zungen 52 entsprechende Winkelausdehnung aufweisen, so dass sich der Druckring 70' ohne die Notwendigkeit, die Zungen 52 der Paare 92, 94 deformieren zu müssen, über diese beim ersten Ausführungsbeispiel hinweg bewegen lässt, wobei sich die Zungen 52 der Paare 92, 94 durch die jeweiligen Aussparungen 110 und 112 in dem Innengewinde 72 in Richtung der Mittelachse 32 hindurchbewegen lassen.

Hinsichtlich der übrigen Merkmale des fünften Ausführungsbeispiels wird daher auf die Ausführungen zum ersten Ausführungsbeispiel Bezug genommen.

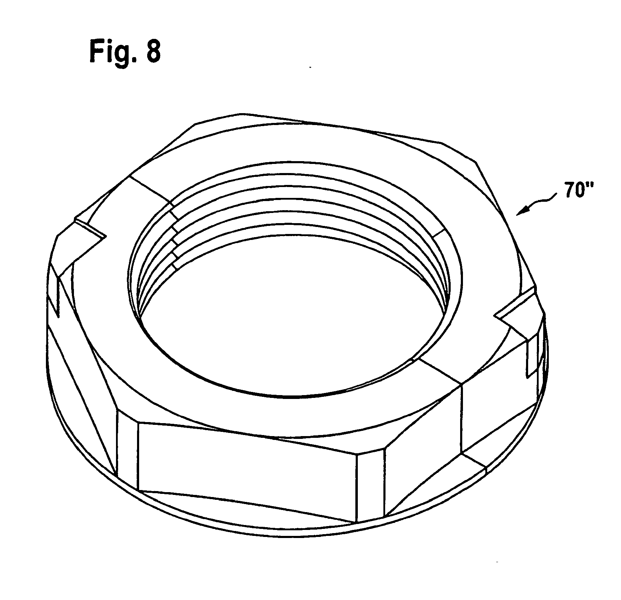

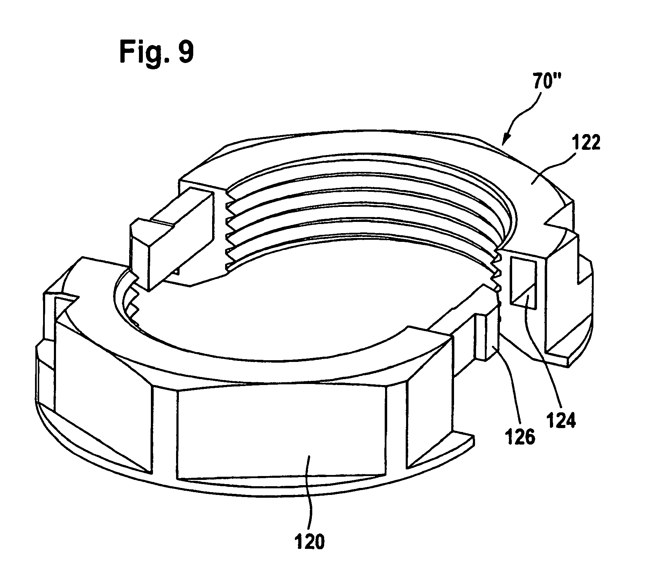

Bei einem sechsten Ausführungsbeispiel einer erfindungsgemäßen Kabeldurchführung ist, wie in Fig. 8 und 9 dargestellt, der Druckring 70" als entlang einer Trennebene 118 teilbarer Druckring 70" ausgebildet, welcher aus zwei Druckringteilen 120 und 122 aufgebaut ist, die über mit Rastausnehmungen 124 in Eingriff bringbare Rasthaken 126 miteinander zu einem zusammenhängenden Druckring 70" verrastbar sind.

Damit entfällt die Notwendigkeit, den Druckring 70" über die Zungen 52 hinweg bewegen zu müssen, wie dies insbesondere beim ersten, zweiten, dritten und vierten Ausführungsbeispiel erforderlich ist.

Vielmehr kann der Druckring 70" unmittelbar auf das Außengewinde 74 des Gehäusestutzens 10 dadurch aufgesetzt werden, dass die Druckringteile 120 und 122 mit der richtigen Ausrichtung relativ zueinander auf das Außengewinde 74 aufgesetzt und durch Ineingriffbringen der Rastausnehmungen 124 mit den Rasthaken 126 miteinander verbunden werden, so dass der zusammenhängende Druckring 70" erst sich auf dem Außengewinde 74 bildet, der dann in gleicher Weise wie der bisher beschriebene Druckring 70 oder der Druckring 70' verdrehbar und durch Verdrehen in Richtung der Mittelachse 32 verschiebbar ist.

Hinsichtlich der übrigen Merkmale wird daher auf die Ausführungen zum ersten bis vierten Ausführungsbeispiel Bezug genommen.

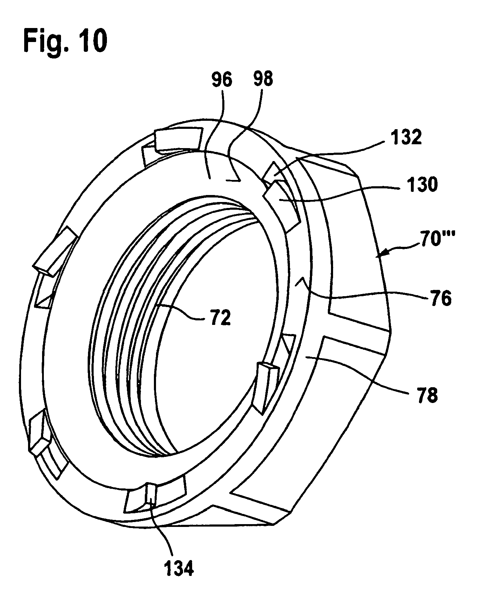

Bei einem siebten Ausführungsbeispiel, dargestellt in Fig. 10, ist der Druckring 70"' entsprechend dem ersten Ausführungsbeispiel ausgebildet.

Allerdings ist der Druckring 70"' im Bereich des Druckflansches 78 mit über die Flanschfläche 76 vorspringenden elastischen Vorspannelementen 130 versehen, welche sich aus den Vorspannelementen 130 zugeordneten Vertiefungen 132 erheben und beim Verdrehen des Druckrings 70"' zum Anlegen der Flanschfläche 76 an dem Wandbereich 40 zuerst den Wandbereich 40 beaufschlagen und dann unter Überwindung der federelastischen Kraft bei weiterem Verdrehen des Druckrings 70"' in die Ausnehmungen 132 hinein bewegt werden.

Die Vorspannelemente 130 führen somit zu einer reibschlüssigen Festlegung des Druckrings 70"' selbst bei nicht fest angezogenem Druckring 70"' und somit zu einer Verbesserung der Dauerhaftigkeit der Montage des Gehäusestutzens 10 an dem Wandbereich 40.

Darüber hinaus können die Vorspannelemente 130 aufgrund ihrer Endflächen 134 als Widerhaken gegen ein Lösen des Druckrings 70"' wirken und dadurch in gewisser Weise formschlüssig zur Verbesserung der Festlegung des Druckrings 70"' an dem Wandbereich 40 beitragen.

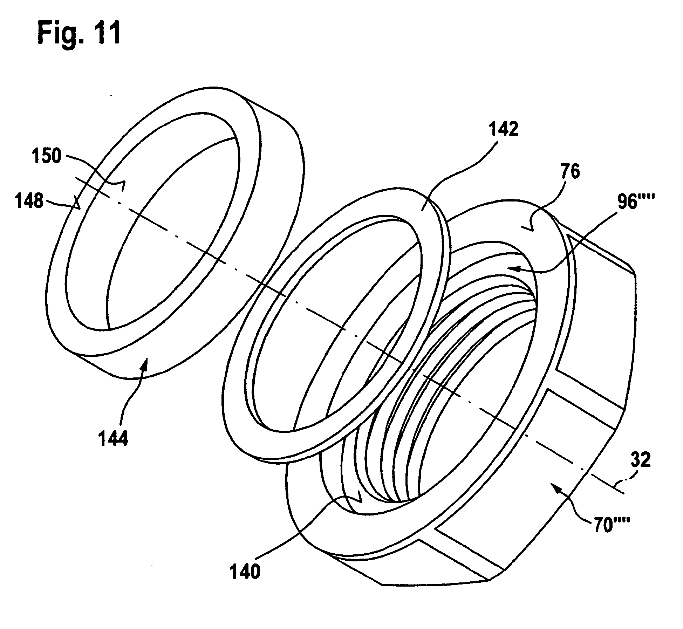

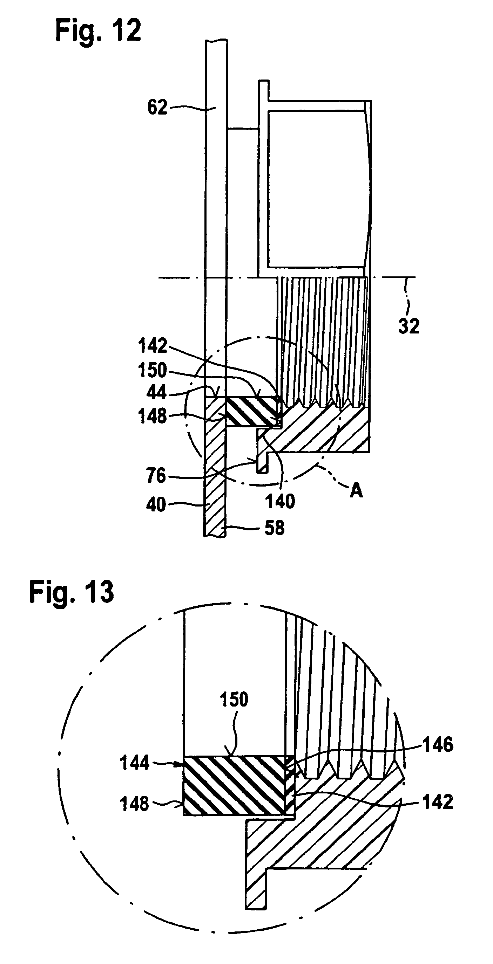

Bei einem achten Ausführungsbeispiel einer erfindungsgemäßen Kabeldurchführung, dargestellt in Fig. 11 bis 13, ist der Druckring 70"" mit einer Ausnehmung 96" versehen, die eine parallel zur Flanschfläche 76 verlaufende Flanschringfläche 140 aufweist. Auf dieser Flanschringfläche 140 liegt ein Zwischenring 142 auf, vorzugsweise ausgebildet aus einer gegenüber der Flanschringfläche 140 gleitenden Folie, und auf einer der Flanschringfläche 140 gegenüberliegenden Seite des Zwischenrings 142 ist ein Ring 144 aus elastischem Material angeordnet, der mit einer Stirnfläche 146 auf dem Zwischenring 142 aufliegt und mit einer gegenüberliegenden Stirnfläche 148 der ersten Seite 58 des Wandbereichs 42 zugewandt ist und an diesen anlegbar ist.

Außerdem ist der elastische Ring 144 mit einer Innenmantelfläche 150 versehen, welche an der Umfangsfläche 101 des Gehäusestutzens 10 anlegbar ist, um mit dieser die dichtend abzuschließen.

Der elastische Ring 144 ist dabei aus einem weichelastischen Material, beispielsweise Gummimaterial oder porösem elastischem Material, ausgebildet, das sich einerseits in Richtung der Mittelachse 32 zusammenpressen lässt, um eine ungefähr parallel zur Mittelachse 32 verlaufende Vorspannkraft zu erzeugen, mit welcher sich beim Einsetzen des Gehäusestutzens 10 mit dem Montageansatz 42 in die Öffnung 44 und Anlagen des elastischen Rings 144 mit der Stirnfläche 148 an der Seite 58 des Wandabschnitts 40 eine Kraft parallel zur Mittelachse 32 erzeugen lässt, welche die Abstützflächen 60 an dem Öffnungsrand 62 der Öffnung 44 anlegt und somit zu einer kraftbeaufschlagten Festlegung der Abstützflächen 60 an dem Öffnungsrand 62 führt, so dass dadurch auch der Montageansatz 42 zumindest in gewissem Maß kraftschlüssig und drehfest an dem Wandbereich 40 festlegbar ist.

Durch weiteres Festdrehen des Druckrings 70"" verstärkt sich die Kraft parallel zur Mittelachse 32 so lange, bis der elastische Ring 144 so stark deformiert ist, dass die Flanschfläche 76 an der Seite 58 des Wandbereichs 40 anliegt und diesen unmittelbar beaufschlagt.

Die Deformation des elastischen Rings 144 in Richtung parallel zur Mittelachse 32 führt zu einer Aufweitung von dessen Querschnittsform in radialer Richtung zur Mittelachse 32 und somit zu einem festen Anliegen der Innenmantelfläche 150 an der Umfangsfläche 101, so dass das federelastische Element 144 zunächst einerseits beim Einsetzen des Montageansatzes 42 in die Öffnung 44 als Vorspannelement dient und nachfolgend bei weiterem Anziehen des Druckrings 70"" als Dichtelement, welches einerseits mit der Seite 58 dicht abschließt und andererseits mit der Umfangsfläche 101 des Gehäusestutzens 10.

## Patentansprüche

1. Kabeldurchführung umfassend einen Gehäusestutzen (10) mit einem zentralen Durchbruch (34),
eine an dem Gehäusestutzen (10) vorgesehene Fixierung (12) mit einem um eine Mittelachse des zentralen Durchbruchs (34) drehbaren Spannelement (16), das zum Festlegen eines durch die Kabeldurchführung hindurchzuführenden Kabels (14) in einer zweiten Drehrichtung drehbar und dadurch mittels einer zweiten Gewindeführung (18, 20) bewegbar ist,
und eine an dem Gehäusestutzen (10) vorgesehene Montageeinrichtung (41), mit einem Montageansatz (42) der durch eine Öffnung (44) in einem Wandbereich (40) eines Geräts hindurchführbar ist und Schnappelemente (46) aufweist, die einen Öffnungsrand (62) hintergreifen, sowie mit einem an dem Gehäusestutzen (10) im Abstand von den Schnappelementen (46) angeordneten und mittels einer Vorschubführung (72, 74) durch eine Drehbewegung um die Mittelachse (32) in Richtung der Schnappelemente (46) verstellbaren Druckring (70), der zum Festlegen des Gehäusestutzens (10) in einer ersten Drehrichtung (85) drehbar und dadurch in Richtung der Schnappelemente (46) durch eine erste Gewindeführung (72, 74) verstellbar ist, wobei die erste Drehrichtung entgegengesetzt zu der zweiten Drehrichtung (89) des Spannelements (16) verläuft,
**dadurch gekennzeichnet, dass** das Spannelement eine Hutmutter (16) ist, die einen Lamellenkorb (24) des Gehäusestutzens (10) übergreift und die beim Drehen in der zweiten Drehrichtung den Lamellenkorb (24) in Richtung einer Mittelachse (32) des zentralen Durchbruchs (34) des Gehäusestutzens (10) beaufschlagt, dass die erste Gewindeführung (72, 74) mindestens einen Gewindegang (84) mit einer geringeren Steigung aufweist als mindestens ein Gewindegang (88) der zweiten Gewindeführung (18, 20), dass die erste Gewindeführung (72, 74) eine größere Selbsthemmung aufweist als die für das Bewegen der Hutmutter (16) zum Festlegen des Kabels (14) vorgesehene zweite Gewindeführung (18, 20), dass die erste Gewindeführung (72, 74) zum Bewegen des Druckrings (70) ein aufgrund seiner Steigung stets selbsthemmendes Gewinde umfasst.

2. Kabeldurchführung nach Anspruch 1, **dadurch gekennzeichnet, dass** die zweite Gewindeführung (18, 20) zum Bewegen der Hutmutter (16) ein mehrgängiges Gewinde umfasst.

3. Kabeldurchführung nach einem der voranstehenden Ansprüche, **dadurch gekennzeichnet, dass** die zweite Gewindeführung (18, 20) zum Bewegen der Hutmutter (16) ein Trapezgewinde umfasst.

4. Kabeldurchführung nach einem der voranstehenden Ansprüche, **dadurch gekennzeichnet, dass** die Schnappelemente (46) radial zu einer Mittelachse (32) des zentralen Durchbruchs (34) bewegbare und einen Öffnungsrand (62) in dem Wandbereich (40) hintergreifende Abstützflächen (60) aufweisen.

5. Kabeldurchführung nach einem der voranstehenden Ansprüche, **dadurch gekennzeichnet, dass** den Abstützflächen (60) der Schnappelemente (46) an den Schnappelementen vorgesehene Zentrierflächen (64) zugeordnet sind.

6. Kabeldurchführung nach einem der voranstehenden Ansprüche, **dadurch gekennzeichnet, dass** der Montageansatz (42) auf gegenüberliegenden Seiten angeordnete Schnappelemente (46) aufweist.

7. Kabeldurchführung nach einem der voranstehenden Ansprüche, **dadurch gekennzeichnet, dass** die Schnappelemente (46) mit einer reibungserhöhenden Beschichtung (106) versehen sind.

8. Kabeldurchführung nach einem der voranstehenden Ansprüche, **dadurch gekennzeichnet, dass** die Schnappelemente (46) mit eine Drehung des Montageansatzes (42) hemmenden Oberflächenstrukturen (108) versehen sind.

9. Kabeldurchführung nach einem der voranstehenden Ansprüche, **dadurch gekennzeichnet, dass** an dem Montageansatz (42) in Bereichen außerhalb der Schnappelemente (46) mit einem Öffnungsrand (62) reibschlüssig wechselwirkende Vorsprünge (90) aufweist.

10. Kabeldurchführung nach einem der voranstehenden Ansprüche, **dadurch gekennzeichnet, dass** die Vorsprünge als Rippen (90) ausgebildet sind.

11. Kabeldurchführung nach einem der voranstehenden Ansprüche, **dadurch gekennzeichnet, dass** der Druckring (70) eine dem Wandbereich (40) zugewandte Flanschfläche (76) aufweist.

12. Kabeldurchführung nach einem der voranstehenden Ansprüche, **dadurch gekennzeichnet, dass** der Druckring (70) eine Aufnahme (96) für einen Dichtring (100) aufweist.

13. Kabeldurchführung nach einem der voranstehenden Ansprüche, **dadurch gekennzeichnet, dass** die Aufnahme (96) als sich an die Flanschfläche (76) anschließende und in einen Gewindedurchbruch des Druckrings (70) übergehende Ausnehmung ausgebildet ist.

14. Kabeldurchführung nach einem der voranstehenden Ansprüche, **dadurch gekennzeichnet, dass** die Ausnehmung (96) eine den Dichtring (100) in Richtung des Wandbereichs (40) und in Richtung des Montageansatzes (42) beaufschlagende Pressfläche (98) aufweist.

15. Kabeldurchführung nach einem der voranstehenden Ansprüche, **dadurch gekennzeichnet, dass** der Montageansatz (42) eine zylindrische Anlagefläche (101) für den Dichtring (100) aufweist.

16. Kabeldurchführung nach einem der voranstehenden Ansprüche, **dadurch gekennzeichnet, dass** der Druckring (70"', 70"") mit einem elastischen Vorspannelement (130, 144) versehen ist.

17. Kabeldurchführung nach Anspruch 16, **dadurch gekennzeichnet, dass** der Druckring (70"') an diesem federelastisch gehaltene Vorspannelemente (130) aufweist.

18. Kabeldurchführung nach Anspruch 17, **dadurch gekennzeichnet, dass** die Vorspannelemente (130) aus einer Flanschfläche des Druckrings (70"') in Richtung des Wandbereichs (40) vorspringend ausgebildet sind.

19. Kabeldurchführung nach einem der voranstehenden Ansprüche, **dadurch gekennzeichnet, dass** der Druckring (70) über die Schnappelemente (46) hinweg zu der für die Bewegung desselben vorgesehenen Gewindeführung (74) bewegbar ist.

20. Kabeldurchführung nach Anspruch 19, **dadurch gekennzeichnet, dass** der Druckring (70) unter elastischer Ausweichbewegung der Schnappelemente (46) des Montageansatzes (42) über diese hinweg bewegbar ist.

21. Kabeldurchführung nach Anspruch 19, **dadurch gekennzeichnet, dass** der Druckring (70') der Größe und Anordnung der Schnappelemente (46) entsprechende Aussparungen (110) aufweist.

22. Kabeldurchführung nach Anspruch 21, **dadurch gekennzeichnet, dass** das Gewinde (72) des Druckrings (70) die Aussparungen (110) aufweist.

23. Kabeldurchführung nach einem der voranstehenden Ansprüche, **dadurch gekennzeichnet, dass** der Druckring (70) längs einer Trennfläche (118) in Druckringteile (120, 122) teilbar und auf dem Montageansatz (42) unter Verbindung der beiden Druckringteile (120, 122) aufsetzbar ist.

## Claims

1. Cable feedthrough comprising a housing socket (10) with a central passage (34),
a fixing member (12) provided on the housing socket (10), with a clamping element (16) rotatable about a central axis of the central passage (34), said clamping element being rotatable in a second direction of rotation for securing a cable (14) to be guided through the cable feedthrough and as a result being movable by means of a second threaded guide (18, 20),
and an assembly device (41) provided on the housing socket (10), with an assembly section (42) adapted to be guided through an opening (44) in a wall area (40) of an appliance and having snap elements (46) engaging behind an edge (62) of the opening as well as with a pressure ring (70) arranged on the housing socket (10) at a distance from the snap elements (46) and adjustable in the direction of the snap elements (46) by means of an advancing guide (72, 74) as a result of a rotary movement about the central axis (32), said pressure ring (70) being rotatable in a first direction of rotation (85) for securing the housing socket (10) and as a result being adjustable in the direction of the snap elements (46) by means of a first threaded guide (72, 74), wherein the first direction of rotation extends in the opposite direction to the second direction of rotation (89) of the clamping element (16),
**characterized in that** the clamping element is a cap nut (16) engaging over a fin basket (24) of the housing socket (10) and acting on the fin basket (24) in the direction of a central axis (32) of the central passage (34) of the housing socket (10) during rotation in the second direction of rotation, that the first threaded guide (72, 74) has at least one thread turn (84) with a smaller pitch than at least one thread turn (88) of the second threaded guide (18, 20), that the first threaded guide (72, 74) has a greater self-locking than the second threaded guide (18, 20) provided for the movement of the cap nut (16) for securing the cable (14), that the first threaded guide (72, 74) for moving the pressure ring (70) comprises a thread always self-locking on account of its pitch.

2. Cable feedthrough as defined in claim 1, **characterized in that** the second threaded guide (18, 20) for moving the cap nut (16) comprises a multiple thread.

3. Cable feedthrough as defined in either one of the preceding claims, **characterized in that** the second threaded guide (18, 20) for moving the cap nut (16) comprises a trapezoidal thread.

4. Cable feedthrough as defined in any one of the preceding claims, **characterized in that** the snap elements (46) have supporting surfaces (60) movable radially in relation to a central axis (32) of the central passage (34) and engaging behind an edge (62) of the opening in the wall area (40).

5. Cable feedthrough as defined in any one of the preceding claims, **characterized in that** centering surfaces (64) provided on the snap elements are associated with the supporting surfaces (60) of the snap elements (46).

6. Cable feedthrough as defined in any one of the preceding claims, **characterized in that** the assembly section (42) has snap elements (46) arranged on oppositely located sides.

7. Cable feedthrough as defined any one of the preceding claims, **characterized in that** the snap elements (46) are provided with a coating (106) increasing friction.

8. Cable feedthrough as defined in any one of the preceding claims, **characterized in that** the snap elements (46) are provided with surface structures (108) inhibiting a rotation of the assembly section (42).

9. Cable feedthrough as defined in any one of the preceding claims, **characterized in that** the assembly section (42) has projections (90) frictionally interacting with an edge (62) of the opening in areas outside the snap elements (46).

10. Cable feedthrough as defined in any one of the preceding claims, **characterized in that** the projections are designed as ribs (90).

11. Cable feedthrough as defined in any one of the preceding claims, **characterized in that** the pressure ring (70) has a flange surface (76) facing the wall area (40).

12. Cable feedthrough as defined in any one of the preceding claims, **characterized in that** the pressure ring (70) has a receptacle (96) for a sealing ring (100).

13. Cable feedthrough as defined in any one of the preceding claims, **characterized in that** the receptacle (96) is designed as a recess adjoining the flange surface (76) and merging into a threaded passage in the pressure ring (70).

14. Cable feedthrough as defined in any one of the preceding claims, **characterized in that** the recess (96) has a pressing surface (98) acting on the sealing ring (100) in the direction of the wall area (40) and in the direction of the assembly section (42).

15. Cable feedthrough as defined in any one of the preceding claims, **characterized in that** the assembly section (42) has a cylindrical contact surface (101) for the sealing ring (100).

16. Cable feedthrough as defined in any one of the preceding claims, **characterized in that** the pressure ring (70"', 70"") is provided with an elastic pretensioning element (130, 144).

17. Cable feedthrough as defined in claim 16, **characterized in that** the pressure ring (70"') has pretensioning elements (130) held on it in a flexible manner.

18. Cable feedthrough as defined in claim 17, **characterized in that** the pretensioning elements (130) are designed so as to project from a flange surface of the pressure ring (70"') in the direction of the wall area (40).

19. Cable feedthrough as defined in any one of the preceding claims, **characterized in that** the pressure ring (70) is movable beyond the snap elements (46) towards the threaded guide (74) provided for the movement thereof.

20. Cable feedthrough as defined in claim 19, **characterized in that** the pressure ring (70) is movable beyond the snap elements (46) of the assembly section (42) due to an elastic deflection movement of said snap elements.

21. Cable feedthrough as defined in claim 19, **characterized in that** the pressure ring (70') has recesses (110) corresponding to the size and arrangement of the snap elements (46).

22. Cable feedthrough as defined in claim 21, **characterized in that** the thread (72) of the pressure ring (70) has the recesses (110).

23. Cable feedthrough as defined in any one of the preceding claims, **characterized in that** the pressure ring (70) is adapted to be divided into pressure ring parts (120, 122) along a dividing surface (118) and placed on the assembly section (42) with connection of the two pressure ring parts (120, 122).

## Revendications

1. Traversée de câble comprenant un manchon (10) avec un passage central (34),
une fixation (12), prévue sur le manchon (10), comprenant un élément de serrage (16) pouvant tourner autour d'un axe médian du passage central (34), lequel élément de serrage pouvant tourner dans un deuxième sens de rotation pour immobiliser un câble (14) à faire passer à travers la traversée de câble, et étant ainsi mobile au moyen d'une deuxième coulisse filetée (18, 20),
et un dispositif de montage (41) prévu sur le manchon (10), avec une embase de montage (42) pouvant être introduite au travers d'un orifice (44) dans une zone de paroi (40) d'un appareil et présentant des éléments à déclic (46) en prise avec l'arrière un bord d'orifice (62), et avec une bague de serrage (70) disposée sur le manchon (10) à distance des éléments à déclic (46) et pouvant être déplacée par un mouvement rotatif autour de l'axe médian (32) en direction des éléments à déclic (46), laquelle bague de serrage peut tourner dans un premier sens de rotation (85) pour immobiliser le manchon (10) et ainsi peut être déplacée en direction des éléments à déclic (46) par une première coulisse filetée (72, 74), le premier sens de rotation étant contraire au deuxième sens de rotation (89) de l'élément de serrage (16),
**caractérisée en ce que** l'élément de serrage est un écrou borgne (16) qui coiffe un contact à lamelles (24) du manchon (10) et qui sollicite ce contact à lamelles (24) en direction d'un axe médian (32) du passage central (34) du manchon (10) lors de la rotation dans le deuxième sens de rotation,
la première coulisse filetée (72, 74) présente au moins une spire (84) d'un pas plus petit qu'au moins une spire (88) de la deuxième coulisse filetée (18, 20),
la première coulisse filetée (72, 74) présente un auto-blocage plus important que celui de la deuxième coulisse (18, 20) prévue pour déplacer l'écrou borgne (16) afin d'immobiliser le câble (14),
la première coulisse filetée (72, 74) pour déplacer la bague de serrage (70), a un filet toujours autobloquant, en raison de son pas.

2. Traversée de câble selon la revendication 1, **caractérisée en ce que** la deuxième coulisse filetée (18, 20) a un filet à filetage multiple pour déplacer l'écrou borgne (16).

3. Traversée de câble selon l'une quelconque des revendications précédentes, **caractérisée en ce que** la deuxième coulisse filetée (18, 20) a un filet trapézoïdal pour déplacer l'écrou borgne (16).

4. Traversée de câble selon l'une quelconque des revendications précédentes, **caractérisée en ce que** les éléments à déclic (46) présentent, radialement à l'axe médian (32) du passage central (34), des surfaces d'appui (60) mobiles et en prise arrière avec un bord d'orifice (62) dans la zone de mur (40).

5. Traversée de câble selon l'une quelconque des revendications précédentes, **caractérisée en ce que** des faces de centrage (64), prévues sur les éléments à déclic, sont affectées aux surfaces d'appui (60) des éléments à déclic (46).

6. Traversée de câble selon l'une quelconque des revendications précédentes, **caractérisée en ce que** l'embase de montage (42) présente des éléments à déclic (46) disposés sur des côtés opposés.

7. Traversée de câble selon l'une quelconque des revendications précédentes, **caractérisée en ce que** les éléments à déclic (46) sont pourvus d'un revêtement (106) qui augmente la friction.

8. Traversée de câble selon l'une quelconque des revendications précédentes, **caractérisée en ce que** les éléments à déclic (46) sont munis de structures superficielles (108) qui empêchent la rotation de l'embase de montage (42).

9. Traversée de câble selon l'une quelconque des revendications précédentes, **caractérisée en ce que** l'embase de montage (42) présente des saillies (90) ayant une interaction de friction avec un bord d'orifice (62), dans les zones à l'extérieur des éléments à déclic (46).

10. Traversée de câble selon l'une quelconque des revendications précédentes, **caractérisée en ce que** les saillies sont en forme de nervures (90).

11. Traversée de câble selon l'une quelconque des revendications précédentes, **caractérisée en ce que** la bague de serrage (70) présente une surface de bride (76) dirigée vers la zone de mur (40).

12. Traversée de câble selon l'une quelconque des revendications précédentes, **caractérisée en ce que** la bague de serrage (70) présente un logement (96) pour une bague d'étanchéité (100).

13. Traversée de câble selon l'une quelconque des revendications précédentes, **caractérisée en ce que** le logement (96) a la forme d'un évidement adjacent à la surface de bride (76) qui se transforme en un passage fileté de la bague de serrage (70).

14. Traversée de câble selon l'une quelconque des revendications précédentes, **caractérisée en ce que** l'évidement (96) présente une surface de pressage (98) qui sollicite la bague d'étanchéité (100) en direction de la zone de mur (40) et en direction de l'embase de montage (42).

15. Traversée de câble selon l'une quelconque des revendications précédentes, **caractérisée en ce que** l'embase de montage (42) présente une surface de butée cylindrique (101) pour la bague d'étanchéité (100).

16. Traversée de câble selon l'une quelconque des revendications précédentes, **caractérisée en ce que** la bague de serrage (70"', 70"") est munie d'un élément de précontrainte élastique (130, 144).

17. Traversée de câble selon la revendication 16, **caractérisée en ce que** la bague de serrage (70"') présente des éléments de précontrainte (130) maintenus de façon élastique sur celle-ci.

18. Traversée de câble selon la revendication 17, **caractérisée en ce que** les éléments de précontrainte (130) dépassent d'une surface de bride de la bague de serrage (70"') en direction de la zone de mur (40).

19. Traversée de câble selon l'une quelconque des revendications précédentes, **caractérisée en ce que** la bague de serrage (70) peut se déplacer, au-delà des éléments à déclic (46), vers la coulisse filetée (74) prévue pour le déplacement de celle-ci.

20. Traversée de câble selon la revendication 19, **caractérisée en ce que** la bague de serrage peut se déplacer au-delà des éléments à déclic (46) de l'embase de montage (42) grâce au mouvement de déport élastique de ceux-ci.

21. Traversée de câble selon la revendication 19, **caractérisée en ce que** la bague de serrage (70') présente des évidements (110) correspondant à la taille et à la disposition des éléments à déclic (46).

22. Traversée de câble selon la revendication 21, **caractérisée en ce que** le filet (72) de la bague de serrage (70) présente des évidements (110).

23. Traversée de câble selon l'une quelconque des revendications précédentes, **caractérisée en ce que** la bague de serrage (70) peut se diviser en parties de bague de serrage (120, 122) le long d'une surface de séparation (118) et être placée sur l'embase de montage (42) tout en reliant les deux parties de bague de serrage (120, 122).
